# EUROPÄISCHE PATENTSCHRIFT

(11) **EP 2 247 483 B1**
(45) Veröffentlichungstag und Bekanntmachung des Hinweises auf die Patenterteilung: **18.01.2012**
(21) Anmeldenummer: 09718560.7
(22) Anmeldetag: 11.02.2009
(51) Int. Cl.: B60W 40/06

(54) **VERFAHREN ZUR ERHÖHUNG DER GENAUIGKEIT EINER POSITIONSVERFOLGUNG VON FAHRZEUGEN IN SOFTWAREBASIERTEN STEUERUNGSSYSTEMEN**
METHOD FOR INCREASING THE ACCURACY OF A POSITION TRACKING OF VEHICLES IN SOFTWARE-BASED CONTROL SYSTEMS
PROCÉDÉ POUR AUGMENTER LA PRÉCISION D'UN SUIVI DE POSITION DE VÉHICULES DANS DES SYSTÈMES DE PILOTAGE SE FONDANT SUR UN LOGICIEL

(30) Priorität: 06.03.2008 DE 102008012915
(43) Veröffentlichungstag der Anmeldung: 10.11.2010
(73) Patentinhaber: Valeo Schalter und Sensoren GmbH, 74321 Bietigheim-Bissingen (DE)
(72) Erfinder: GOTZIG, Heinrich, 74081 Heilbronn (DE); VOVKUSHEVSKY, Vsevolod, 74321 Bietigheim-Bissingen (DE); JECKER, Nicolas, 73730 Esslingen (DE)
(86) Internationale Anmeldenummer: PCT/EP2009/000931
(87) Internationale Veröffentlichungsnummer: WO 2009/109279

(56) Entgegenhaltungen:
- EP-A- 1 201 522
- EP-A- 1 775 188
- EP-A- 1 950 113
- GB-A- 2 441 421
- US-A- 5 610 815

## Beschreibung

### Stand der Technik

Die Erfindung betrifft ein Verfahren zur Erhöhung der Genauigkeit einer Positionsverfolgung eines Fahrzeugs in softwarebasierten Steuerungssystemen gemäß dem Oberbegriff des Anspruchs 1, sowie ein Computerprogrammprodukt gemäß dem Oberbegriff des Anspruchs 9.

Eine Positions- bzw. Bewegungsverfolgung ist eine der wichtigsten Komponenten vieler moderner softwarebasierter Fahrzeugsteuerungssysteme ebenso wie auch vieler als Fahrassistenzsysteme bezeichneter Fahrassistenzvorrichtungen, welche einer Unterstützung eines Fahrers eines Kraftfahrzeugs bei bestimmten Vorgängen im Straßenverkehr dienen. In modernen Kraftfahrzeugen, im Folgenden auch kurz als Fahrzeuge bezeichnet, wird bereits eine Vielzahl von Fahrassistenzsystemen für unterschiedlichste Aufgaben eingesetzt, welche ein softwarebasiertes Steuerungssystem zur Positions- bzw. Bewegungsverfolgung des Fahrzeugs aufweisen. Umso wichtiger sind die Genauigkeit der Positionsbestimmung und die Robustheit der Positions- bzw. Bewegungsverfolgung gegen Störungen oder andere Anomalien, die das Ergebnis beeinflussen können.

Mögliche Problemursachen bzw. Ursachen von solchen Störungen oder Anomalien sind z.B. Schlupf an den Rädern, Phasenverschiebung zwischen Weggebersignalen, Unterschiede der Radumfänge, Verfügbarkeit und/oder Genauigkeit eines Lenkwinkelwertes usw..

Als eine Aufgabe der Erfindung kann es deshalb angesehen werden, ein Verfahren bzw. einen Algorithmus zu entwickeln, der die Genauigkeit und Robustheit der Positions- bzw. Bewegungsverfolgung erhöht, wobei das Verfahren bzw. der Algorithmus in computerlesbaren Programmmitteln eines Computerprogrammprodukts so kompakt wie möglich abgebildet oder gestaltet werden können soll, damit die computerlesbaren Programmmittel auch preiswertere, auch als Mikrocontroller bezeichnete Mikroprozessoren mit zugehörigen Speichermitteln, welche das Computerprogrammprodukt ausführen, zur Durchführung des Verfahrens bzw. des Algorithmus veranlassen können.

### Offenbarung der Erfindung

Die Nachteile des Standes der Technik werden bei einem erfindungsgemäßen Verfahren zur Erhöhung der Genauigkeit einer Positionsverfolgung eines Fahrzeugs in softwarebasierten Steuerungssystemen erfindungsgemäß dadurch vermieden, indem parallel Berechnungen nach zwei oder mehr unterschiedlichen Fahrzeugberechnungsmodellen, im Folgenden kurz als Modelle bezeichnet, durchgeführt werden. Die Modelle sind so gewählt, dass, soweit es geht, Daten aus unterschiedlichen Quellen für die Berechnungen verwendet werden. Durch eine daraus resultierende Redundanz der Berechnungen können die einzelnen Modelle relativ einfach gehalten werden, sodass eine Implementierung mikrokontrollertauglich ist.

Vorzugsweise werden die Ergebnisse aller Berechnungen plausibilisiert, indem sie miteinander verglichen und/oder verrechnet werden, wodurch ein optimales Ergebnis erreicht wird.

Grundsätzlich können die Ergebnisse aus jedem einzelnen Modell gewichtet oder ungewichtet berücksichtigt werden.

Abweichungen zwischen den verwendeten Modellen dienen vorzugsweise als Eingangsdaten für eine Berechnung eines Korrekturwertes und/oder werden für eine Rekalibrierung der verwendeten Modelle verwendet.

Eine vorteilhafte Ausgestaltung der Erfindung sieht vor, dass zur Positionsverfolgung eines Fahrzeugs in einem softwarebasierten Steuerungssystem eine von dem Fahrzeug zurückgelegte Strecke dadurch bestimmt wird, indem mittels des Korrekturwerts ein Mittelwert korrigiert wird, welcher als Mittelwert aus von ungelenkten Rädern des Fahrzeugs zurückgelegten Wegstrecken gebildet wird.

Vorzugsweise wird eine von dem Korrekturwert nicht kompensierte Differenz zwischen den Veränderungen der Position bzw. Orientierung des Fahrzeugs, die sich aus den Modellen ergeben, als eine akkumulierte Restdifferenz in Form eines Abweichungsverlaufs gespeichert und in einem weiteren Verlauf des Verfahrens verwendet.

Eine andere vorteilhafte Ausgestaltung der Erfindung sieht vor, dass eine die Plausibilisierung durchführende Plausibilisierungslogik von einem Kernalgorithmus getrennt ist und den Bedürfnissen eines Fahrzeugsteuerungssystems und/oder eines Fahrassistenzsystems anpassbar und/oder angepasst ist.

Eine besonders vorteilhafte Ausgestaltung der Erfindung sieht vor, dass ein Ergebnis der Berechnungen nach der Plausibilisierung in Form einer optimierten Position des Fahrzeugs ausgegeben wird.

Das erfindungsgemäße Verfahren ist beispielsweise in Verbindung mit Fahrassistenzsystemen und sonstigen elektronischen Systemen in Fahrzeugen vorteilhaft anwendbar, welche eine Positions- bzw. Bewegungsverfolgung des Fahrzeugs als Teilfunktion benötigen.

Eine besonders vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken in eine beispielsweise längs zur Fahrbahn orientierte Parklücke ermöglicht.

Eine besonders vorteilhafte Ausgestaltung der Erfindung betrifft ein Computerprogrammprodukt gespeichert auf einem computerverwendbaren Medium, umfassend computerlesbare Programmmittel, welche bei Ausführung des Computerprogrammprodukts auf einem einen Mikroprozessor mit zugehörigen Speichermitteln umfassenden Mikrocontroller oder auf einem Computer diesen zur Durchführung eines oben beschriebenen, erfindungsgemäßen Verfahrens veranlassen.

### Kurze Beschreibung der Zeichnung

Ein Ausführungsbeispiel der Erfindung ist in den Figuren der Zeichnung dargestellt und wird nachfolgend näher erläutert. Es zeigen:
- Fig. 1: eine schematische Darstellung eines erfindungsgemäßen Verfahrens in Form eines Blockbildes.
- Fig. 2: eine schematische Darstellung eines Ablaufdiagramms eines erfindungsgemäßen Verfahrens.

### Ausführungsform der Erfindung

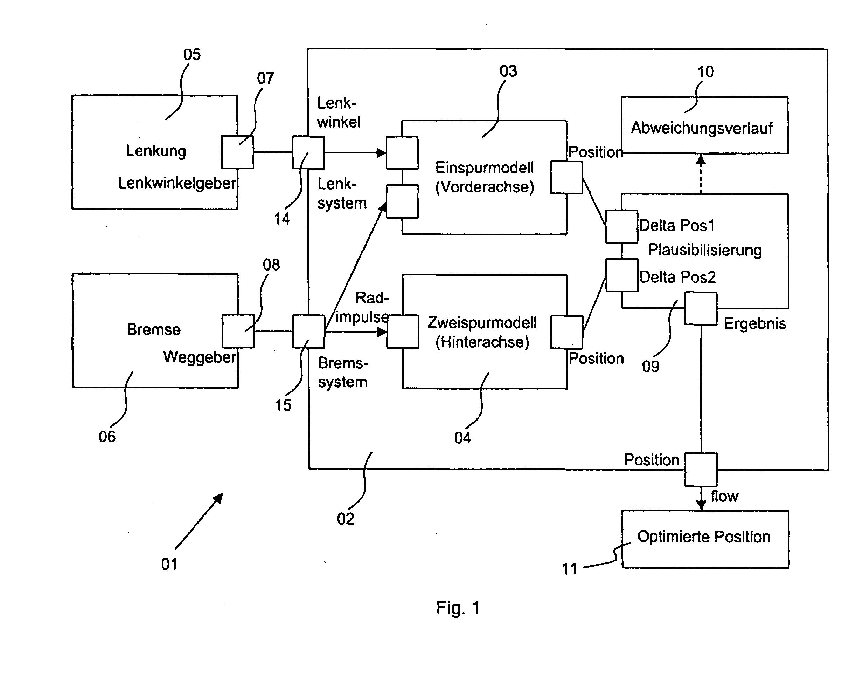

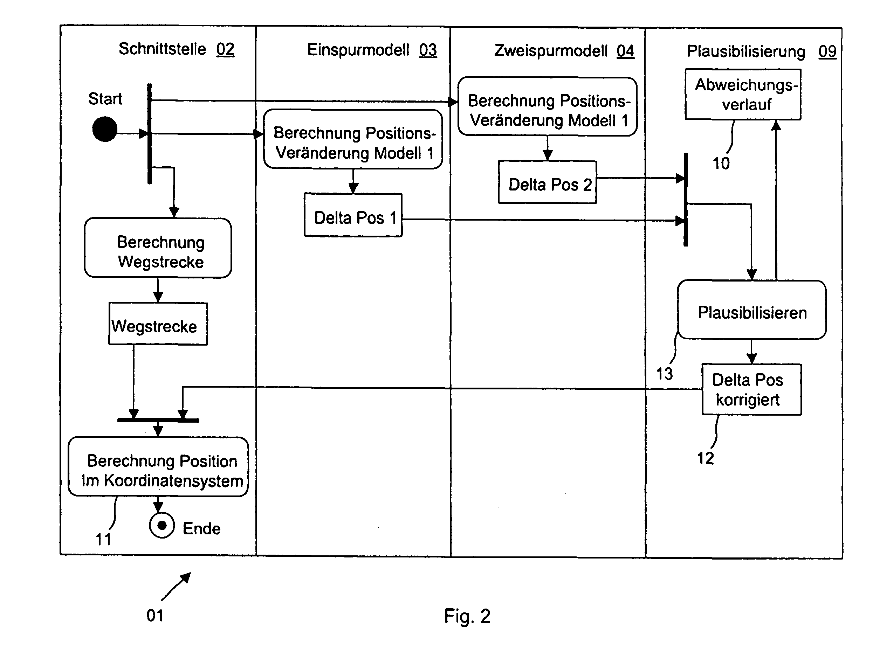

Ein den Fig. 1 und 2 entnehmbares erfindungsgemäßes Verfahren sieht vor, dass Berechnungen nach zwei oder mehr unterschiedlichen Modellen 03, 04 zur Positions- bzw. Bewegungsverfolgung parallel durchgeführt werden. Die Modelle 03, 04 sind so gewählt, dass, soweit es geht, Daten aus unterschiedlichen Quellen 07, 08 zur Berechnungen verwendet werden. Durch eine daraus resultierende Redundanz der Berechnungen können die einzelnen Modelle 03, 04 relativ einfach gehalten werden, sodass eine Implementierung mikrokontrollertauglich ist. Die Ergebnisse aller Berechnungen werden vorzugsweise plausibilisiert, indem sie beispielsweise miteinander verglichen bzw. verrechnet werden, wodurch ein optimales Ergebnis erreicht wird. Die Ergebnisse aus jedem einzelnen Modell 03, 04 können gewichtet oder ungewichtet berücksichtig werden. Die Abweichungen zwischen den verwendeten Modellen 03, 04 können als Eingangsdaten für eine Berechnung eines Korrekturwertes 21 dienen und/oder für eine Rekalibrierung der verwendeten Modelle 03, 04 verwendet werden. Eine die Plausibilisierung 09 durchführende Plausibilisierungslogik 13 kann vorzugsweise von einem Kernalgorithmus 02 getrennt werden und den Bedürfnissen beispielsweise eines Fahrzeugsteuerungssystems ebenso wie auch denen eines Fahrassistenzsystems angepasst werden.

In einem in Fig. 1 dargestellten, ein erfindungsgemäßes Verfahren wiedergebenden Blockbild 01, wird zur Positions- bzw. Bewegungsverfolgung 02 eine Veränderung der Fahrzeugorientierung eines Fahrzeugs mit Hilfe von zwei unterschiedlichen Modellen 03, 04, einem Einspurmodell-03, basierend auf einer von einem Lenkwinkelgeber 07 oder einer Lenkübersetzungskurve einer Lenkung 05 bzw. eines Lenksystems 14 des Fahrzeugs gegebenen Lenkwinkel und einem Zweispurmodell 04, basierend auf von einem Weggeber 08 einer Bremse 06 bzw. eines Bremssystems 15 von den hinteren, bzw. ungelenkten Rädern des Fahrzeugs gewonnenen Daten bzw. Informationen, berechnet. Als eine vom Fahrzeug zurückgelegte Strecke wird dabei ein Mittelwert der Wegstrecken von den beiden Hinterrädern verwendet.

Bei einer Plausibilisierung 09 wird des Weiteren die Differenz zwischen den Veränderungen der Orientierung des Fahrzeugs, die sich aus den zwei Modellen 03, 04 ergeben, berechnet. Weichen die Werte voneinander ab, so wird ein Korrekturwert 12 berechnet, welcher in die resultierende Berechnung einfließt. Die von dem Korrekturwert 12 nicht kompensierte Differenz wird als eine akkumulierte Restdifferenz in Form eines Abweichungsverlaufs 10 gespeichert und im weiteren Verlauf des Verfahrens verwendet.

Das Ergebnis der Berechnungen nach der Plausibilisierung 09 wird in Form einer optimierten Position 11 des Fahrzeugs ausgegeben.

Das in Fig. 1 wiedergegebene erfindungsgemäße Verfahren ist unter Verwendung gleich oder gleichartig bezeichneter funktionaler Blöcke nochmals in Form eines Ablaufdiagramms 20 in Fig. 2 dargestellt.

Vorzugsweise wird das Ergebnis aus dem Zweispurmodell 03 höher gewichtet, indem es als Basis für die weiteren Berechnungen verwendet wird.

Je nach Wunsch kann die Gewichtung einzelner Zwischenergebnisse verändert werden. Der Ablauf kann mit weiteren Berechnungsmodellen, beispielsweise einer Berechnung einer Veränderung der Orientierung des Fahrzeugs aus einer Gierrate, ergänzt werden. Wen mehr Modelle 03, 04 verwendet werden, muss der Ablauf der Plausibilisierung 09 entsprechend angepasst werden.

Zur weiteren Verbesserung der Genauigkeit kann ein dynamisches Lernen eingeführt werden. Dabei findet eine regelmäßige Kontrolle der Güte der einzelnen Daten bzw. Informationen der verwendeten Sensoren 07, 08 statt, welche dann entsprechend gewichtet werden können. Im in Fig. 1 dargestellten Beispiel sind diese Sensoren 07, 08 der Lenkwinkelgeber 07 und der Weggeber 08. Insbesondere führt eine Berücksichtigung eines Signals bzw. einer Information von einem Lenkwinkelgeber 07 bzw. einem Lenkwinkelsensor bzw. einer Lenkübersetzungskurve bei einer Kurvenfahrt, oder wenn die Räder unterschiedliche Durchmesser aufweisen, zu genaueren Ergebnissen.

Darüber hinaus können anstelle von von zwei Rädern gewonnenen Informationen auch von von vier oder mehr Rädern gewonnene Informationen berücksichtigt werden.

Weitere Sensorinformationen, welche unabhängig von bereits verwendeten vorliegen, wie beispielsweise dem Gierratensensor, können zu einer Erhöhung der Redundanz der Ergebnisse herangezogen werden.

Wichtig ist hervorzuheben, dass eine Verwendung zwar unterschiedlicher Modelle, die aber alle dieselben Datenquellen nutzen, zu einem schlechten Ergebnis führen kann, wenn die Datenquelle fehlerhafte oder inkonsistente Daten liefert.

Grundsätzlich ist außerdem denkbar, die Plausibilisierungslogik ggf. anders zu gestalten. So ist es beispielsweise denkbar, auf mehrere Modelle 03, 04 zu verzichten und stattdessen die Eingangsdaten gegeneinander zu plausibilisieren, beispielsweise die einzelnen Daten von Weggebern 08 rechts und links bzw. vorne und hinten.

## Patentansprüche

1. Verfahren zur Erhöhung der Genauigkeit einer Positionsverfolgung (02) eines Fahrzeugs in softwarebasierten Steuerungssystemen, **dadurch gekennzeichnet, dass** parallel Berechnungen nach zwei oder mehr unterschiedlichen Modellen (03, 04) zur Positionsverfolgung (02) durchgeführt werden, wobei die verwendeten Modelle (03, 04) so gewählt sind, dass Daten aus unterschiedlichen Quellen (05, 06, 07, 08) für die Berechnungen verwendet werden.

2. Verfahren nach Anspruch 1, **dadurch gekennzeichnet, dass** die Ergebnisse aller Berechnungen plausibilisiert (09) werden, indem sie miteinander verglichen und/oder verrechnet werden.

3. Verfahren nach Anspruch 1 oder 2, **dadurch gekennzeichnet, dass** Ergebnisse aus jedem einzelnen Modell (03, 04) gewichtet oder ungewichtet berücksichtigt werden.

4. Verfahren nach einem der vorhergehenden Ansprüche, **dadurch gekennzeichnet, dass** Abweichungen zwischen den verwendeten Modellen (03, 04) als Eingangsdaten für eine Berechnung eines Korrekturwertes (12) dienen und/oder für eine Rekalibrierung der verwendeten Modelle (03, 04) verwendet werden.

5. Verfahren nach Anspruch 4, **dadurch gekennzeichnet, dass** zur Positionsverfolgung (02) eines Fahrzeugs in einem softwarebasierten Steuerungssystem eine von dem Fahrzeug zurückgelegte Strecke dadurch bestimmt wird, indem mittels des Korrekturwerts ein Mittelwert korrigiert wird, welcher Mittelwert aus von ungelenkten Rädern des Fahrzeugs zurückgelegten Wegstrecken gebildet wird.

6. Verfahren nach Anspruch 4 oder 5, **dadurch gekennzeichnet, dass** eine von dem Korrekturwert nicht kompensierte Differenz zwischen den Veränderungen der Position des Fahrzeugs, die sich aus den Modellen (03, 04) ergeben, als eine akkumulierte Restdifferenz in Form eines Abweichungsverlaufs (10) gespeichert und in einem weiteren Verlauf des Verfahrens verwendet wird.

7. Verfahren nach einem der vorhergehenden Ansprüche, **dadurch gekennzeichnet, dass** eine die Plausibilisierung (09) durchführende Plausibilisierungslogik (13) von einem Kernalgorithmus (02) getrennt ist und den Bedürfnissen eines Fahrzeugsteuerungssystems und/oder eines Fahrassistenzsystems angepasst ist.

8. Verfahren nach einem der vorhergehenden Ansprüche, **dadurch gekennzeichnet, dass** ein Ergebnis der Berechnungen nach der Plausibilisierung (09) in Form einer optimierten Position (11) des Fahrzeugs ausgegeben wird.

9. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 8 veranlassen.

## Claims

1. Method for increasing the accuracy of position tracking (02) of a vehicle in software-based control systems, **characterized in that** calculations are carried out in parallel according to two or more different models (03, 04) for position tracking (02), wherein the models (03, 04) which are used are selected such that data from different sources (05, 06, 07, 08) are used for the calculations.

2. Method according to Claim 1, **characterized in that** the plausibility of the results of all the calculations is checked (09) by comparing one with another and/or setting them off against one another.

3. Method according to Claim 1 or 2, **characterized in that** results from each individual model (03, 04) are taken into account in a weighted or unweighted form.

4. Method according to one of the preceding claims, **characterized in that** deviations between the models (03, 04) which are used serve as input data for calculation of a correction value (12) and/or are used for recalibrating the models (03, 04) which are used.

5. Method according to Claim 4, **characterized in that**, in order to perform Position tracking (02) of a vehicle in a software-based control system a section of a route which has been travelled along by the vehicle is determined by correcting a mean value by means of the correction value, which mean value is formed from distances travelled by the unsteered wheels of the vehicle.

6. Method according to Claim 4 or 5, **characterized in that** a difference between the changes in the position of the vehicle which is not compensated by the correction value, said difference arising from the models (03, 04) is stored as an accumulative residual difference in the form of a deviation profile (10) and is used in a further profile of the method.

7. Method according to one of the preceding claims, **characterized in that** a plausibility-checking logic unit (13) which carries out the plausibility checking (09) is disconnected from a core algorithm (02) and is adapted to the requirements of a vehicle control system and/or of a driving assistance system.

8. Method according to one of the preceding claims, **characterized in that** a result of the calculations is outputted in the form of an optimized position (11) of the vehicle after the plausibility checking (09).

9. Computer program product stored on a medium which can be used by a computer, comprising computer-readable programming means which, when the computer program product is executed on a microprocessor with associated storage means or on a computer, cause said computer to carry out a method according to one of Claims 1 to 8.

## Revendications

1. Procédé d'augmentation de la précision d'un suivi (02) de la position d'un véhicule dans des systèmes de commande à base logicielle,
**caractérisé en ce que**
des calculs parallèles selon deux ou plusieurs modèles différents (03, 04) sont exécutés pour suivre (02) le véhicule, les modèles (03, 04) utilisés étant sélectionnés de manière à utiliser pour les calculs différentes sources (05, 06, 07, 08).

2. Procédé selon la revendication 1, **caractérisé en ce que** la plausibilité des résultats de tous les calculs est vérifiée (09) en les comparant entre eux ou en les exécutant à nouveau.

3. Procédé selon les revendications 1 ou 2, **caractérisé en ce que** les résultats de chacun des différents modèles (03, 04) sont pris en compte avec ou sans pondération.

4. Procédé selon l'une des revendications précédentes, **caractérisé en ce que** les écarts entre les modèles (03, 04) utilisés servent de données d'entrée dans le calcul d'une valeur de correction (12) et/ou sont utilisés pour réétalonner les modèles (03, 04) utilisés.

5. Procédé selon la revendication 4, **caractérisé en ce que** le chemin parcouru par un véhicule est défini pour suivre (02) la position du véhicule dans un système de commande à base logicielle en corrigeant par une valeur de correction une valeur moyenne formée des chemins parcourus par les roues non directrices du véhicule.

6. Procédé selon les revendications 4 ou 5, **caractérisé en ce qu'**une différence, non compensée par la valeur de correction, entre les variations de position du véhicule qui résultent des modèles (03, 04) est conservée en mémoire comme différence résiduelle cumulée sous la forme d'une évolution (10) de l'écart et est utilisée dans la poursuite de l'exécution du procédé.

7. Procédé selon l'une des revendications précédentes, **caractérisé en ce qu'**une logique (13) de vérification de plausibilité qui effectue la vérification de la plausibilité (09) est séparée d'un algorithme de coeur (02) et est adaptée aux besoins d'un système de commande du véhicule et/ou d'un système d'assistance au conducteur.

8. Procédé selon l'une des revendications précédentes, **caractérisé en ce qu'**un résultat des calculs est délivré sous la forme d'une position optimisée (11) du véhicule après la vérification de plausibilité (09).

9. Produit de programme informatique conservé sur un support utilisable sur un ordinateur et comprenant des moyens de programme lisibles par ordinateur et qui, lors de l'exécution du produit de programme informatique sur un microprocesseur auquel sont associés des moyens de mémoire ou sur un ordinateur amènent ces derniers à exécuter un procédé selon l'une des revendications 1 à 8.
